Europäisches Patentamt

European Patent Office

Office européen des brevets

(11) Veröffentlichungsnummer: **0 445 426 A2**

## (12) EUROPÄISCHE PATENTANMELDUNG

(21) Anmeldenummer: 90125375.7

(22) Anmeldetag: 22.12.90

(51) Int. Cl.⁵: **G01B 3/20**

(30) Priorität: 03.03.90 DE 4006776

(43) Veröffentlichungstag der Anmeldung:
**11.09.91 Patentblatt 91/37**

(84) Benannte Vertragsstaaten:
**AT BE CH DE DK ES FR GB GR IT LI LU NL SE**

(71) Anmelder: **CARL MAHR GMBH & CO.
Plochinger Strasse 23-27**

**W-7300 Esslingen(DE)**

(72) Erfinder: **Mahr, Carl
Plochinger Strasse 23-27
W-7300 Esslingen(DE)**

(74) Vertreter: **Rüger, Rudolf, Dr.-Ing. et al
Webergasse 3 Postfach 348
W-7300 Esslingen/Neckar(DE)**

(54) **Mechanisches Messwerkzeug zur Längemessung.**

㊗ Ein mechanisches Meßwerkzeug (1) trägt an einem Grundkörper (2) ein Strichgitter (7), das mit Hilfe eines Meßwertaufnehmers (18) abgetastet wird, der in einem an dem Grundkörper (2) verschieblichen Glied sitzt. An dem verschieblichen Glied befindet sich eine Anzeigeeinrichtung (26) zur Anzeige der bei der Verschiebung des beweglichen Gliedes übertragenen Striche des Strichgitters (7). Um unabhängig von der Art des Meßwerkzeuges (1) eine aufrechtstehende Darstellung der Ziffernanzeige zu bekommen, enthält die zwischen der Anzeigeeinrichtung (26) und dem Meßwertaufnehmer (18) angeordnete Auswerteschaltung (22) eine Vorrichtung, um auf elektronischem Wege die Anzeige zu drehen.

Fig. 1

Die Erfindung geht aus von einem mechanischen Meßwerkzeug zur Längenmessung, mit den Merkmalen des Oberbegriffs des Anspruches 1.

Beispielsweise aus der DE-PS 38 11 202 ist ein gattungsgemäßer Meßschieber bekannt, bei dem die Anzeige auf elektronische Weise geschieht. Die Schiene des bekannten Meßschiebers trägt unter einer Abdeckung ein Strichgitter, das mit Hilfe eines elektrisch kapazitiven Aufnehmers abgetastet wird. Der Aufnehmer sitzt in dem auf der Schiene spielfrei gleitend geführten Schieber, der außerdem eine mit dem Meßwertaufnehmer verbundene elektronische Schaltung enthält. Mit Hilfe der elektronischen Schaltung werden die vom Meßwertaufnehmer erfaßten und bei der Verstellung des Schiebers überfahrenen Striche des Strichgitters gezählt und in eine Längenangabe umgerechnet. Die errechnete Längenangabe wird sodann auf einem mehrstelligen LCD-Display angezeigt, das für jede anzuzeigende Stelle mehrere Segmente aufweist, die auf elektrische Weise sichtbar gemacht werden können. In der Regel sind dies 7 Segmentanzeigen, d.h. für jede darzustellende Zahl sind 7 in Form einer Acht angeordnete Balkensegmente vorgesehen, aus denen in bekannter Weise die Ziffern von 0 bis 9 zusammengesetzt werden können.

Der Stellenumfang des Displays entspricht dem maximalen Meßwert, der mit der gewünschten Feinheit angezeigt werden kann. Bei Meßschiebern werden für gewöhnlich 5-stellige Displays verwendet, wenn bei einer Angabe in mm auf 1/100 mm genau angezeigt werden soll und der maximale Meßumfang 999 mm nicht überschreitet.

Derartige digital anzeigende Meßschieber haben sich in der Praxis außerordentlich bewährt, weil sie wegen der großen Zifferndarstellung auch aus größerer Entfernung einwandfrei ohne Paralaxe abgelesen werden können.

Es gibt allerdings Situationen, unter denen der Meßschieber in einer solchen Stellung an den zu messenden Gegenstand herangebracht werden muß, daß die Zahlen aus der Sicht des Betrachters Kopf stehen, womit die niedrigstwertige Anzeigestelle nicht,wie für gewöhnlich, am rechten, sondern am linken Rand erscheint. Bereits hierdurch können Ablesefehler entstehen. Eine weitere Fehlerquelle ist die Änderung des Bedeutungsinhaltes der Symbole für die Ziffern 6 und 9, die durch eine Drehung ineinander übergeführt werden können.

Ausgehend hiervon ist es Aufgabe der Erfindung, ein Meßwerkzeug zu schaffen, bei dem die Gefahr von Ablesefehlern weitgehend ausgeschlossen ist.

Dieser Aufgabe wird erfindungsgemäß durch das Meßwerkzeug mit den Merkmalen des Anspruches 1 gelöst.

Infolge der Möglichkeit, die Auswerteschaltung in zwei unterschiedlichen Betriebsweisen betreiben zu können, kann in praktisch jeder Lage des Meßwerkzeuges und damit der Anzeigeeinrichtung eine aufrechtstehende Zahlendarstellung erreicht werden, bei der die niedrigstwertige Stelle, wie gewöhnlich, am rechten Rand erscheint, während die Ziffern aufrecht stehen. Die Notwendigkeit, die ohnehin etwas schwer zu erkennenden 7 Segmentsymbole im kopfstehenden Zustand ablesen zu müssen, entfällt dadurch.

Die notwendige Vertauschung von rechts und links bzw. oben und unten an der Anzeigeeinrichtung kann entweder durch einen Umschalter bewerkstelligt werden, der zwischen dem Decoder der Auswerteschaltung und der Anzeigeeinrichtung angeordnet ist, oder indem zwei BCD-7-Segment-Decoder verwendet werden, von denen der eine so angeschlossen ist, daß die niedrigwertigste Stelle zu dem einen Seitenrand der Anzeigeeinrichtung führt, während der andere Decoder umgekehrt mit der Anzeigeeinrichtung verbunden ist. Durch wahlweises Aktivieren der Decoder kann die eine oder die andere Darstellungsform erreicht werden.

Im Falle der Verwendung eines Mikroprozessors kann die Umwandlung der Darstellungsform auch durch unterschiedliche Steuerprogramme erzielt werden.

Schließlich ist die erfindungsgemäße Lösung in ihrer Anwendung nicht nur auf Meßschieber beschränkt, sondern kann in gleicher Weise auf alle digital anzeigenden Meßwerkzeuge, bspw. Meßuhren und dergl., übertragen werden, die häufig auch in anderen Positionen eingesetzt werden müssen als der, bei der sich das Tastglied unterhalb des Gehäuses befindet.

In der Zeichnung sind Ausführungsbeispiele des Gegenstandes der Erfindung dargestellt. Es zeigen:

Fig. 1    einen Meßschieber als Anwendungsbeispiel der Erfindung,

Fig. 2    das Blockschaltbild für den Meßschieber nach Fig. 1, mit einem Umschalter vor der Anzeigeeinrichtung, und

Fig. 3    ein Blockschaltbild für den Meßschieber nach Fig. 1, mit zwei unterschiedlich angeschlossenen BCD-7-Segment-Decodern.

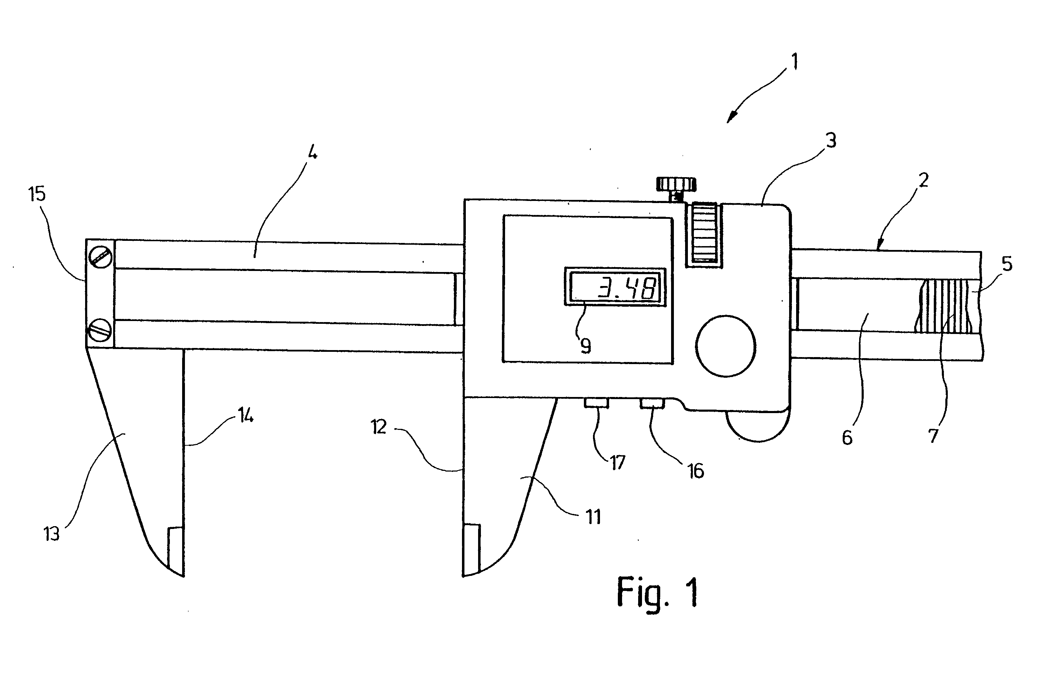

Die Fig. 1 zeigt als Anwendungsbeispiel einen Meßschieber 1 mit einer geraden, prismatischen Schiene 2, auf der ein Schieber 3 spielfrei gleitend geführt ist. Der Schieber 3 enthält hierzu eine in seiner Längsrichtung durchgehende Öffnung, durch die die Schiene 2 hindurchführt und die in ihrem Querschnitt an das Profil der Schiene 2 angepaßt ist. Die Schiene 2 trägt zwei parallel mit Abstand zueinander verlaufende Flachseiten, von denen eine eine Oberseite 4 bildet. Die Oberseite 4 enthält eine flache Nut 5, in der abgedeckt durch ein Band 6 ein Strichgitter 7 mit quer zur Längsachse der Schiene 2 sich erstreckenden Strichen eingeklebt ist. Dieses Strichgitter 7 wirkt mit einer in dem Schieber 3 untergebrachten elektronischen Anzeigeeinrichtung 8 zusammen, deren digitale Zifferananzeigeeinrichtung 9 auf der Ober- oder Vorderseite des Schiebers 3 zu erkennen ist. An dem Schieber 3 sitzt einstückig ein Meßschnabel 11 mit einer planen Meßfläche 12, die in einer zu der Längsachse der Schiene 2 senkrechten Ebene liegt. Der Meßschnabel 11 erstreckt sich in der Fläche der Oberseite 4 der Schiene 2 von der Schiene weg.

Mit dem Meßschnabel 11 wirkt ein weiterer Meßschnabel 13 zusammen, der eine ebenfalls plane Meßfläche 14 trägt und der einstückig mit der Schiene 2 an ihrem Ende 15 verbunden ist.

Um die elektronische Anzeigeeinrichtung einzuschalten, ist an einer Schmalseite des Schiebers 3 ein Einschaltknopf 16 vorgesehen, sowie ein weiterer Schalter 17, der dazu dient, die elektronische Anzeigeeinrichtung zwischen ihren beiden möglichen Betriebszuständen hin- und herzuschalten, wie dies nachstehend erläutert ist.

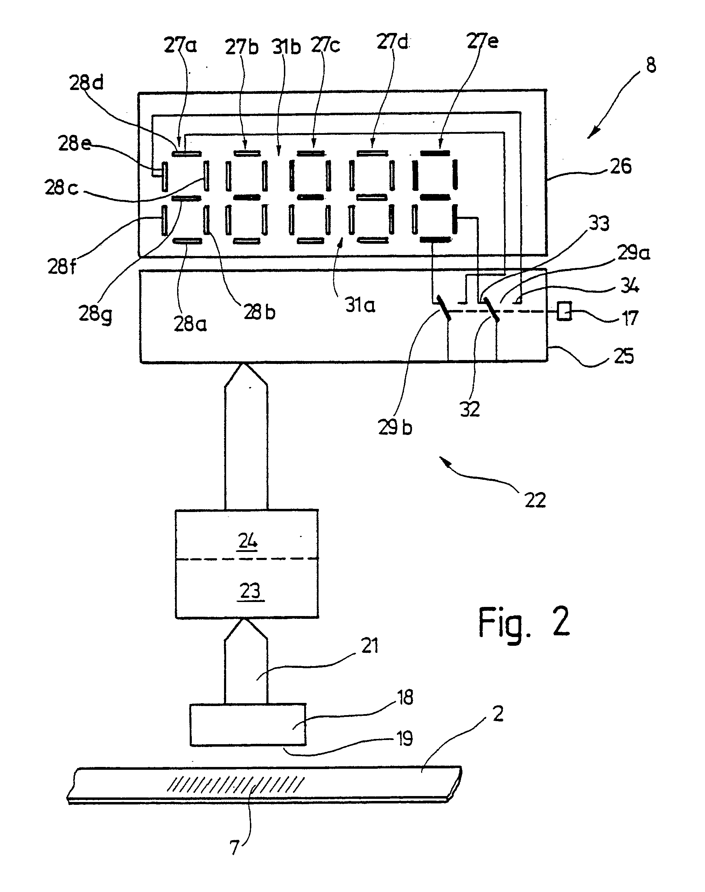

Fig. 2 zeigt in stark schematisierter Form das Blockschaltbild der elektronischen Anzeigeeinrichtung 8. Sie enthält einen in dem Schieber 3 befestigten Meßwertaufnehmer 18, der mit seiner empfindlichen Fläche 19 über das Strichgitter 7 der Schiene 2 läuft, wenn der Schieber 3 auf der Schiene 2 entlanggeschoben wird. Über eine mehrpolige Verbindung 21 steht der Meßwertaufnehmer 18 elektrisch mit einer Auswerteschaltung 22 in Verbindung, die einen Zähler 23 mit nachgeschaltetem Decoder 24, einen mehrpoligen Umschalter 25 und ein LCD-Display 26 aufweist. Der Zähler 23 ist in Fig. 2 mit dem Decoder 24 zu einem Block vereint, der im übrigen auch alle Funktionseinheiten enthält, die notwendig sind, um den Zähler 23 je nach Bewegungsrichtung des Schiebers 3 vorwärts oder rückwärts zählen zu lassen.

An den Eingang des Zählers 23 gelangen die von dem Meßwertaufnehmer 18 abgegebenen Impulse, so daß der Zählerinhalt ein Maß für die bei der Bewegung des Schiebers 3 überfahrenen Striche des Strichgitters 7 ist, die wiederum die Strecke repräsentieren, die der Schieber 3 auf der Schiene 2 zurückgelegt hat.

Die hierzu notwendige Schaltung ist bekannt und braucht deswegen nicht erläutert zu werden.

Unmittelbar auf den Zähler 23 folgt der Decoder 24, dessen Schaltung ebenfalls bekannt ist und der dazu dient, die in dem Zähler 23 gespeicherten Digitalwerte in entsprechende Signale für das LCD-Display 26 umzuwandeln. Es sei dabei angenommen, daß der Zähler ein Dezimalzähler ist, d.h. er weist je anzuzeigende Dezimalstelle 4 Binärstellen auf. Für das gezeigte Ausführungsbeispiel enthält der Zähler 23 also insgesamt 20 Binärstellen, wobei jeweils vier Binärstellen einer Dezimalstelle in dem LCD-Display 26 zugeordnet sind.

Das LCD-Display 26 enthält je darzustellende Dezimalziffer 27a .. 27e jeweils 7 balkenförmige Segmente 28a bis 28g, die, wie gezeigt, in Form einer Acht angeordnet sind. Die Bezeichnung 28a .. 28g soll, obwohl dies in der Fig. 2 nur für das Ziffernsymbol 27a angegeben ist, im übrigen auch für die andern Ziffernsymbole 27b .. 27e gelten und dort das entsprechende Balkensegment kennzeichnen.

Um die jeweils gewünschte Ziffer anzeigen zu können, wird bei dem betreffenden Symbol 27a .. 27e die entsprechende Konfiguration aus Balkensegmenten 28a .. 28g über den Decoder 24 mit der nicht veranschaulichten und in dem Schieber 3 untergebrachten Spannungsquelle verbunden. Beispielsweise werden zum Darstellen einer 5, wie in Fig. 2 bei dem Anzeigesymbol 27e gezeigt, die Segmente 28d, 28e, 28g, 28b und 28a mit der Spannungsquelle verbunden, was - wie schematisch angedeutet - die entsprechende Ziffer aus dunklen Balken vor einem hellen Hintergrund erscheinen läßt, während die übrigen Balken hell und deswegen an sich unsichtbar bleiben.

Um je nach Lage des Meßschiebers 1 die niedrigstwertige Stelle der mit Hilfe des LCD-Displays 26 darzustellenden Zahl mit Hilfe des Zahlensymbols 27e oder mit Hilfe des Zahlensymbols 27a erzeugen zu können, liegt in der elektrischen mehrpoligen Verbindung zwischen dem LCD-Display 26 und dem entsprechend vielstelligen Decoder 24 der vielpolige Umschalter 25. Der mehrpolige Umschalter 25 enthält je Segment 28a .. 28g sämtlicher Zahlensymbole 27a .. 27e, mit Ausnahme des Segmentes 28g des Zahlensymbols 27c, einen einpoligen Umschalter 29, d.h. insgesamt bei dem gezeigten Beispiel 34 Umschalter 29, zu denen noch ein Umschalter hinzukommt, um die Umschaltung eines Dezimalpunktes 31a bzw. 31b zu ermöglichen, je nachdem ob die Anzeige, bezogen auf die Darstellung der auszugebenden Zahl, aufrecht oder auf dem Kopf steht.

Die Umschalter 29 des mehrpoligen Umschalters 25 sind in dem Blockschaltbild durch die üblichen mechanischen Schaltsymbole gekennzeichnet, obwohl selbstverständlich zu diesem Zweck an sich bekannte Halbleiterschalter vorgesehen sind. Sämtliche Umschalter 29 werden gleichzeitig über den von außen zugänglichen elektrischen Schalter 17 entweder in die in Fig. 2 gezeigte Schaltstellung oder die andere Schaltstellung gebracht. Die gezeigte Schaltstellung solle der Betriebsweise entsprechen, bei der, bezogen auf Fig. 2, die in dem Zähler 23 enthaltende BCD-codierte Zahl auf dem LCD-Display 26 aufrechtstehend gezeigt wird, wobei die niedrigstwertige Stelle sich am rechten Rand befindet. Die andere Schaltstellung entspricht demgemäß einer Anzeige, bei der, bezogen auf Fig. 2, die dargestellte Zahl Kopf steht, wobei die niedrigstwertige Stelle der Zahl am linken Rand liegt.

Jeder Umschalter 29 besteht aus einem Umschaltkontakt 32, der über den elektrischen Schalter 17 zu betätigen ist, sowie zwei Ausgangskontakten 33 und 34. Die eingangs- und die ausgangsseitige Beschaltung des Umschalters 25 geschieht in der Weise, daß jeder Umschaltkontakt 32 mit einem entsprechenden zugehörigen Ausgang des Decoders 24 verbunden ist. Die Ausgangsanschlüsse 33, 34 jedes Schalters 29 liegen an unterschiedlichen Segmenten 28a .. 28g von unterschiedlichen Symbolen 27a .. 27e, und zwar in der Weise, daß die von einem Umschalter 29 erreichbaren Segmente 28a .. 28g sich bezüglich des Segmentes 28g des Ziffernsymboles 27c punktsymmetrisch gegenüberliegen. Das erwähnte Segment braucht nicht umgeschaltet zu werden, da das zugehörige Zahlensymbol 27c wegen der ungeraden Anzahl von Stellen unabhängig von der Lage des LCD-Displays 26 innerhalb der dargestellten Zahl immer dieselbe Wertigkeit repräsentiert und außerdem der von diesem Segment gebildete Strich innerhalb der Ziffer in der Mitte liegt. Dies bedeutet, daß wenn der Ausgangsanschluß 33 des Umschalters 29a mit dem Segment 28b des Symbols 27e verbunden ist, der Ausgangsanschluß 34 mit dem Segment 28e des Symbols 27a verbunden sein muß, damit bei der kopfstehenden Darstellung und dem Umdrehen von Fig. 2 dieselbe Anzeige zustandekommt wie bei der aufrechtstehenden Lage von Fig. 2 und der aufrechtstehenden Darstellung der Zahl. Die beiden erwähnten Segmente 28a und 28e der beiden Symbole 27e und 27a liegen punktsymmetrisch bezüglich des Segmentes 28g des Symbols 27c. Sinngemäß gilt dann für das Segment 28a des Symbols 27e, daß es an denselben Umschalter 29b angeschlossen sein muß, wie das Segment 28d des Symbols 27a usw.

Im Falle einer geraden Stellenanzahl ist die Punktsymmetrie beim Anschluß der Segmente bezüglich eines Punktes, der zwischen den beiden in der Mitte befindlichen Zahlensegmenten liegt.

Entsprechend der Zahlendarstellung auf dem LCD-Display 26 muß auch der Dezimalpunkt mit umgeschaltet werden, d.h. bei der aufrechten Darstellung in Fig. 2 ist der Dezimalpunkt 31a aktiviert, während bei der auf dem Kopf stehenden Anzeigeform der Dezimalpunkt 31b sichtbar und der Dezimalpunkt 31a unsichtbar ist.

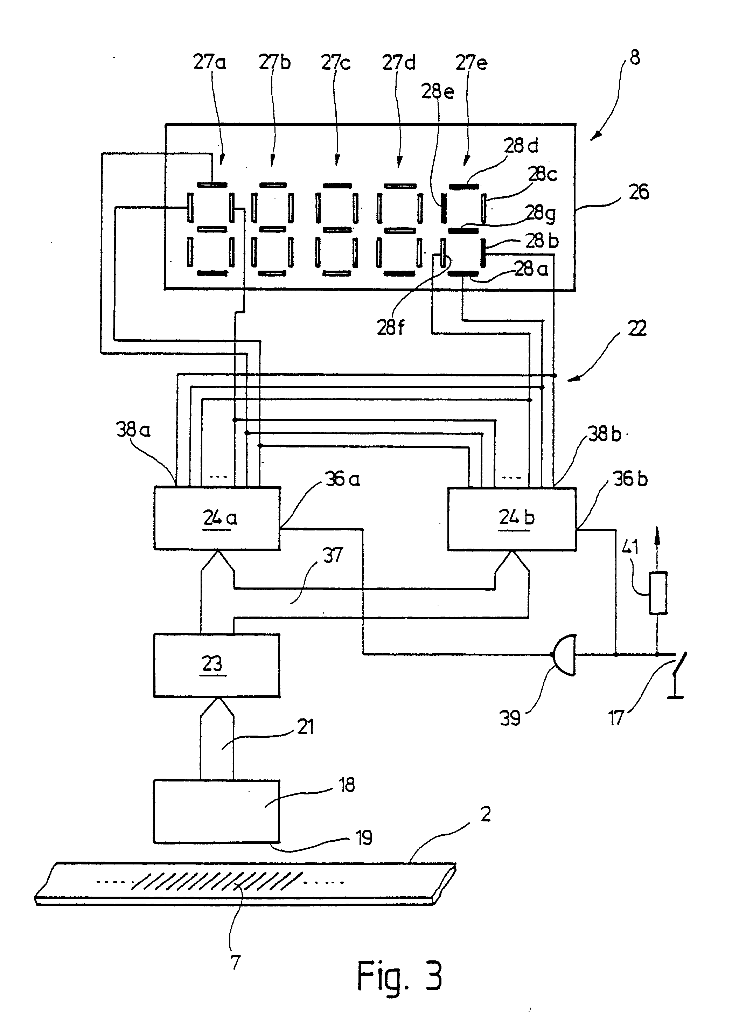

Eine andere Schaltung, um die Zifferanzeige umzudrehen, ist in Fig. 3 dargestellt. Hierbei sind für aus den vorhergehenden Figuren wiederkehrende bereits beschriebene Teile dieselben Bezugszeichen verwendet.

Der wesentliche Unterschied zwischen den beiden Ausführungsformen nach Fig. 2 und Fig. 3 besteht darin, daß anstelle des mehrpoligen Schalters 25 bei der Ausführungsform nach Fig. 3 zwei Decoder 24a und 24b verwendet werden, um das LCD-Display 26 anzusteuern. Die beiden Decoder 24a und 24b sind untereinander gleich und weisen sogenannte Tri-State-Ausgänge auf. Diese Ausgänge haben die Eigenschaft, im dritten Zustand hochohmig zu sein, um damit einen parallel geschalteten anderen Ausgang, der im Zustand L oder H ist, nicht zu belasten. Um den hochohmigen Zustand an den Ausgängen einzuschalten, hat jeder der Decoder 24a, 24b einen Enable-Eingang 36a bzw. 36 b.

Die beiden Decoder 24a und 24b sind mit ihren Eingängen über eine entsprechende mehrpolige Verbindungsleitung 37 mit den Ausgängen des 5-stelligen Dezimalzählers 23 verbunden. Sie sind beide parallelgeschaltet in der Weise, daß der niedrigstwertige Eingang der beiden Decoder 24a und 24b mit der niedrigstwertigen Stelle des Dezimalzählers 23 und die höchstwertigen Eingänge der Decoder 24a, 24b mit dem höchstwertigen Ausgang des Dezimalzählers 23 verbunden sind. Demzufolge erzeugen beide Decoder 24a und 24b an ihren Ausgängen 38a und 38b dasselbe Binärmuster, wenn sie mit derselben Binärzahl am Eingang beaufschlagt werden.

Ausgangsseitig sind dagegen die Ausgänge 38a und 38b punktsymmetrisch bezüglich des Segmentes 28g des Symbols 27c angeschlossen, wie dies durch die nur zum Teil veranschaulichte Verdrahtung angedeutet ist. Auf die vollständige Wiedergabe der Verbindungen zwischen den beiden Decodern 24a und 24b sowie dem LCD-Display 26 wurde der Übersichtlichkeit halber verzichtet. Wie zu ersehen ist, entspricht das Segment 28f des Symbols 27e bei der aufrechtstehenden Zahlendarstellung dem Segment 28e des Symbols 27a bei der kopfstehenden Wiedergabe. Wenn nun angenommen wird, daß der niedrigste Ausgang 38d des Decoders 24b mit dem Segment 28b des Symbols 27e und der höchstwertige Ausgang 38b des Decoders 24d mit dem Segment 28e des Symbols 27a verbunden ist, muß, um bei der kopfstehenden Wiedergabe dieselbe Zahl zu erhalten, der höchstwertige Ausgang 38a des Decoders 24a an das Segment 28b des Symbols 27e und der niedrigstwertige Ausgang 38a an das Segment 28e des Symbols 27a angeschlossen werden. Sinngemäß dasselbe gilt für alle folgenden Eingänge. Für ein LCD-Display mit ungerader Stellenanzahl ergibt sich damit wie vorher eine quasi punktsymmetrische Beschaltung bezüglich des Segmentes 28g des Symbols 27c.

Damit von den beiden Decodern 24a, 24b immer nur einer aktiv ist, ist der Enable-Eingang 36a an den Ausgang eines Inverters 38 angeschlossen, mit dessen Eingang der Enable-Eingang 36b verbunden ist. Außerdem liegt an dem Eingang des Inverters 39 ein Pull-up-Widerstand 41, der den Eingang mit dem Pluspol einer nicht weiter gezeigten Spannungsquelle verbindet. Mit Hilfe des Schalters 17 kann somit der Eingang des Inverters 39 wahlweise zwischen L und H umgeschaltet werden. Infolge des Inverters ist damit entweder der Enable-Eingang 36d oder der Enable-Eingang 36a H, während der jeweils andere Enable-Eingang L ist, womit immer nur einer der Decoder 24a, 24b die Verbindung zwischen dem Zähler 23 und dem LCD-Display 26 herstellt.

Ersichtlicherweise sind auch noch andere Schaltungen denkbar, um die Zahlendarstellung auf dem LCD-Display 26 umzukehren, beispielsweise indem der mehrpolige Schalter 25 durch eine Anordnung aus logischen Gliedern ersetzt wird. Schließlich ist erkennbar, daß die dargestellten Schaltungen in ihrer Anwendung nicht nur auf Meßschieber beschränkt sind, sondern bei anderen Meßwerkzeugen eingesetzt werden können, bei denen davon auszugehen ist, daß sie gegebenenfalls kopfüber verwendet werden müssen und dennoch eine aufrechtstehende, seitenrichtige Zahlenanzeige gewünscht ist, beispielweise bei Meßuhren, Meßschrauben und ähnlichem.

**Patentansprüche**

1. Mechanisches Meßwerkzeug zur Längenmessung, wie Meßschieber (1), Meßuhren, Meßschrauben und ähnlichem mit einem Grundkörper (2) oder Gehäuse und einem an dem Grundkörper (2) bzw. in dem Gehäuse verschieblich geführten Tastglied (3), sowie mit einer Strichteilung (7) und einem gegenüber der Strichteilung (7) beweglichen Meßwertaufnehmer (18), der mit einer Auswerteschaltung (22) verbunden ist, die elektrische Signalausgänge (38a, 38b) aufweist, an die eine mehrstellige, einen linken, einen rechten, einen oberen und einen unteren Rand aufweisende digitale Anzeigeeinrichtung (26) angeschlossen ist, deren einzelne, in wenigstens einer Reihe nebeneinander angeordnete Zahlensymbole (27a .. 27e) von einzelnen, durch elektrische Beeinflussung wahlweise sichtbar zu machenden Segmenten (28a .. 28g) gebildet sind, wobei der Meßwertaufnehmer (18) mit dem Tastglied (3) und die Strichteilung (7) mit dem Gehäuse bzw. dem Grundkörper (2) oder umgekehrt fest verbunden ist, dadurch gekennzeichnet, daß die Auswerteschaltung (22) zwei Betriebszustände aufweist, zwischen denen sie wahlweise umschaltbar ist, daß in dem einen Betriebszustand die niedrigstwertige Stelle einer anzuzeigenden Zahl an dem rechten Rand der Anzeigeeinrichtung (26) und in dem anderen Betriebszustand die niedrigstwertige Stelle der anzuzeigenden Zahl an dem linken Rand der Anzeigeeinrichtung (26) zur Anzeige zu bringen ist, und daß in dem einen Betriebszustand die mit Hilfe der Symbole (27a .. 27e) der Anzeigeeinrichtung (26) darzustellenden Zahlen aufrechtstehend und in dem anderen Betriebszustand kopfstehend angezeigt werden, wobei die Füße der angezeigten Zahlen zu dem oberen Rand der Anzeigeeinrichtung (26) weisen, wenn die räumliche Lage der Anzeigeeinrichtung (26) beibehalten wird.

2. Meßwerkzeug nach Anspruch 1, dadurch gekennzeichnet, daß die Auswerteschaltung (22) einen Decoder (24) zum Umwandeln einer dem Eingang zugeführten Binärzahl in ein Signalmuster zum Ansteuern der Anzeigeeinrichtung (26) aufweist und daß zwischen dem Decoder (24) und der Anzeigeeinrichtung (26) eine mehrpolige Umschalteinrichtung (25) angeordnet ist.

3. Meßwerkzeug nach Anspruch 1, dadurch gekennzeichnet, daß die Auswerteschaltung (22) zwei Decoder (24a, 24d) zum Umwandeln einer zugeführten Binärzahl in ein Signalmuster zum Ansteuern der Anzeigeeinrichtung (26) aufweist, daß die beiden Decoder (24a, 24d) eingangsseitig parallelgeschaltet sind und ausgangsseitig mit unterschiedlichen Segmenten (28a .. 28g) der Symbole (27a .. 27e) der Anzeigeeinrichtung (26) verbunden sind, und daß jeweils nur einer der Decoder (24a, 24b) die logische Verbindung zu der Anzeigeeinrichtung (26) herstellt.

Fig. 1

EP 0 445 426 A2

EP 0 445 426 A2

Fig. 2

Fig. 3